Europäisches Patentamt

European Patent Office

Office européen des brevets

Publication number: **0 315 721**
A1

# EUROPEAN PATENT APPLICATION

Application number: 87310753.6

Date of filing: 07.12.87

Int. Cl.⁴: **F02B 63/06 , B60K 25/02 , F04B 35/00**

Priority: **03.11.87 AU 80689/87**

Date of publication of application:
**17.05.89 Bulletin 89/20**

Designated Contracting States:
**AT BE CH DE ES FR GB GR IT LI LU NL SE**

Applicant: **Westraw Pty. Limited**
**Suite 1 116 Darby Street**
**Newcastle New South Wales 2300(AU)**

Inventor: **Moodie, Robert Charles**
**Suite 1 116 Darby Street**
**Newcastle New South Wales 2300(AU)**

Representative: **Enskat, Michael Antony Frank**
**et al**
**Saunders & Dolleymore 9, Rickmansworth**
**Road**
**Watford Hertfordshire WD1 7HE(GB)**

Internal combustion driven air compressor.

The invention relates to an air compressor (1) which is characterised in that it is adapted to be mounted adjacent to an alternator of a motor vehicle, to allow power to be imparted to the compressor from the alternator (30). The compressor (1) includes means (60) to allow power to be imparted to the compressor (1) from the alternator (30) of a motor vehicle. The invention includes drive means (60) which extend outwardly and laterally from one end of the compressor (1), a distal end (34) of said drive means (60) being adapted to be engaged with a shaft of an alternator (30), such that on operation of a motor vehicle engine and consequential rotation of the alternator shaft, power is imparted from the alternator (30) to a drive shaft (7) of the compressor (1), via the drive means (60).

Fig. 2

THIS INVENTION relates to a compressor arrangement and in particular to an air compressor to be driven by. and used in association with, motor vehicles.

Up until this time numerous air compressors have been manufactured and sold, which are capable of being driven by motor vehicles. For example, such compressors have been linked to the power takeoff of tractors and other vehicles. This has not always been convenient or efficient, and in some cases vehicles have had to be substantially modified to allow compressors to be driven by such motor vehicles.

It is an object of this invention to go at least some way towards overcoming or minimizing these problems. It is a further object of the invention to provide the public with a useful choice.

Other objects of this invention will become apparent from the following description.

According to one aspect of this invention there is provided an air compressor characterised in that it is adapted to be mounted adjacent to, and driven by, a motor vehicle alternator.

According to a further aspect of this invention there is provided an air compressor, characterised in that it is mounted on or adjacent to an alternator of a motor vehicle engine, said air compressor being connected to said alternator such that the alternator imparts a drive moment to said compressor.

According to a further aspect of this invention there is provided an air compressor adapted to be mounted adjacent an alternator of a motor vehicle; drive means been provided at one end of said compressor. said drive means including a driven pulley attached to an end of a drive shaft of said compressor and a spaced part drive pulley; belt means extending between and passing about said pulleys; said drive means being so formed as to allow for engagement of an alternator shaft with said drive pulley, the arrangement being such that on rotation of said alternator shaft, said rotational moment is imparted to said drive pulley which causes rotation of the belt to impart a rotational moment to the driven pulley, which in turn imparts a rotational moment to the drive shaft of the compressor.

According to a further aspect of this invention there is provided an air compressor adapted to be mounted adjacent an alternator of a motor vehicle; drive means been provided at one end of said compressor and extending outwardly from one side thereof, said drive means including a driven pulley attached to an end of a drive shaft of said compressor and a spaced part drive pulley; belt means extending between and passing about said pulleys; said drive means being so formed as to allow for engagement of an alternator shaft with said drive pulley, the arrangement being such that on rotation of said alternator shaft, said rotational moment is imparted to said drive pulley which causes rotation of the belt to impart moment to the driven pulley. which in turn imparts a rotational moment to the drive shaft of the compressor; clutch means being provided to allow for engagement and disengagement between said drive pulley and said alternator.

According to a further aspect of this invention there is provided an air compressor including a main chamber and at least two outwardly extending cylinders; a drive shaft extending through said main chamber and having connected thereto ends of pistons extending into, for longitudinal and reciprocal movement within, said cylinders: said cylinders being formed or provided with air inlet and outlet means; means being provided to mount said air compressor adjacent an alternator of a motor vehicle; means being provided to impart a rotational moment from a shaft of said alternator to said drive shaft of said compressor: rotation of said drive shaft within the compressor imparting a longitudinal and reciprocal moment to said pistons, such that said pistons move within said cylinders, downward strokes of said pistons drawing air in through said inlets, and upward movements of said pistons forcing compressed air out of said outlet means.

According to a further aspect of this invention there is provided an air compressor including a main chamber and at least two outwardly extending and angled cylinders; a drive shaft extending through said main chamber and having connected thereto ends of pistons extending into, for longitudinal and reciprocal movment within. said cylinders: said cylinders being formed or provided with air inlet and outlet means; means being provided to mount said air compressor adjacent an alternator of a motor vehicle; means being provided to impart a rotational moment from a shaft of said alternator to said drive shaft of said compressor: rotation of said drive shaft within the compressor imparting a longitudinal and reciprocal moment to said pistons, such that said pistons move within said cylinders; downward strokes of said pistons drawing air in through said inlet means, and upward movements of said pistons forcing compressed air out of said outlet means; a transverse and substantially hollow bar extending across and between upper ends of said cylinders; said outlets leading into said transverse bar; one or more compressed air outlets being provided in the said tranverse bar; the arrangement being such that on operation of said compressor, compressed air will exit from said one or more outlets in said transverse bar.

This invention will now be described by way of example only, with reference to the accompanying drawings, wherein:

Figure 1: is a general view of a compressor mounted to a motor vehicle alternator according to one form of the present invention

Figure 2: is an exploded and sectional view of a compressor according to one form of the present invention

Up until this time, there have been many suggestions and arrangements for operating an air compressor from the power of a motor vehicle. By way of example, power takeoff means are often used. Known means and methods have not always been totally successful however. It has however been found during experimentation, that the present invention provides a particularly effective means of operating an air compressor from the power of a motor vehicle, by mounting the air compressor on or adjacent to the alternator of a motor vehicle, in such a way that power from the alternator is transferred or imparted to the compressor, to drive the compressor. No such arrangement has previously been suggested, and the arrangement has been found to be particularly efficient and useful. In addition, the attachment of the compressor is relatively straight forward and does not involve major modifications to motor vehicle engines or components.

We refer now to the accompanying drawings which illustrate preferred forms of the invention. It should however be appreciated that modifications and improvements may be made to the invention, without departing from the scope or spirit thereof.

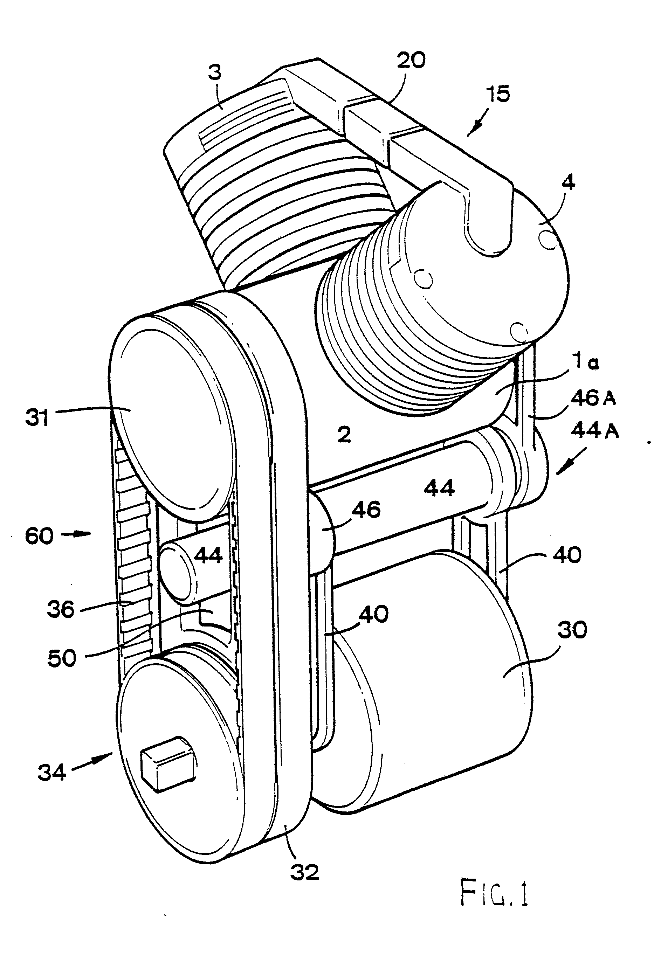

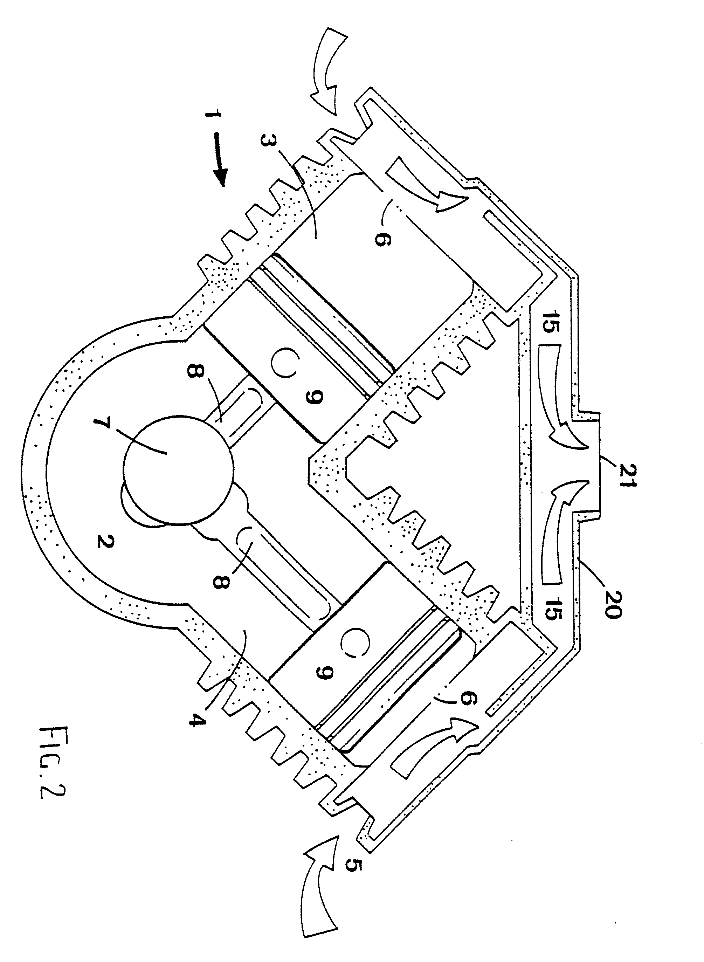

The compressor 1 shown in Figures 1 and 2 of the drawings includes a main chamber 2, an elongated drive shaft 7 being mounted for rotation within said chamber. At least two cylinders 3, 4, extend outwardly at an angle from said chamber. Preferably, ends of said cylinders are provided with air inlet means 5 and air outlet means 6. Preferably the air inlet and outlet means are non return arrangments. A piston is preferably mounted within each cylinder, including a piston 8 shaft and a piston head 9, the ends of the piston shafts being suitably connected to the drive shaft passing through the chamber. The drive shaft 7 passing through the chamber is adapted to rotate about its longitudinal axis, and on having power imparted thereto, this rotational moment imparts or transfers a substantially reciprocating longitudinal moment to each of the pistons, to cause the pistons to reciprocate longitudinally, within the cylinders.

In use, and on power being imparted to the drive shaft 7, such that it rotates about its longitudinal axis, the pistons 8, 9, will be caused to longitudinally reciprocate within the cylinders. Downward movement of the pistons 8, 9, will draw air into the cylinders 3, 4, and chamber 2, the upward or outward movement of the pistons 8, 9, forcing compressed air out of the cylinders 3, 4, out of one or more outlets 6. If desired, appropriate connection means can be provided in association with the one or more outlets, to allow for the outlets to be connected to a known pipe, hose or tube, (not shown) to allow for the compressed air to be used in the desired matter.

In a preferred form of the invention as shown in the accompanying drawings, a transverse and substantially hollow bar 20 connects and extends between upper ends of the cylinders 3, 4, so as to form an additional chamber 15. One or more outlets 6 from each cylinder 3, 4, preferably lead into the transverse bar 20 such that compressed air is forced from the cylinders 3, 4, through the outlets 6 and into the transverse bar 20 or chamber 15. Preferably one or more outlets 21 are provided in the transverse bar, to allow for connection to hoses, pipes, tubes or the like (not shown), so that the compressed air can be used for any desired purpose.

Preferably, as shown in the accompanying drawings, the cylinders 3, 4, extend outwardly at an angle from the longitudinal axis of the chamber 2, at least one from each side thereof, so as to form a substantially 'V' configuration. If desired however more than two such cylinders can be provided. The above is by way of example only.

The present invention also provides means whereby power from the shaft of an alternator 30 of a motor vehicle engine, can be imparted or transferred to the drive shaft 7 of the compressor 1. Appropriate connections can be made there between, such that on the engine of a motor vehicle being started, and on the shaft of the alternator rotating, the rotational moment is imparted by way of suitable linkages or connections to the drive shaft 7 of the compressor 1. Suitable and appropriate brackets are provided so as to mount the compressor in a position adjacent to the alternator, so as to allow for a straight forward and efficient connection and imparting of power from the alternator 30 to the compressor 1.

In a preferred form of the invention and as shown by way of example in Figure 2 on the accompanying drawings, the compressor 1 is provided with drive means 60 at one thereof, the drive means being in the form of an elongate guard or housing which extends outwardly at an angle from one end of the compressor 1. Preferably, a driven pulley 31 is mounting to an end of the drive shaft 7 of the compressor 1 at one thereof, while the housing or guard 32 mounts a drive pulley 34 at a distal end thereof, longitudinally spaced apart from and outwardly of the compressor 1 and driven pulley 31. Appropriate belt means 36 are provided extending between and connecting the drive pulley 34 and the driven pulley 31. The drive pulley 34 is provided with a connection means which engages with the end of the shaft of the alternator 30 of a motor vehicle, so that on rotation of the alternator shaft, and an actuation of said motor vehicle and said alternator a rotational moment is imparted to the drive pulley 34 which in turn rotates and imparts, by way of the belt 36, a rotational moment to the driven pulley 31 and the drive shaft 7 of the compressor 1.

In a preferred form of the invention appropriate and suitable known clutch means are provided in connection with the drive pulley 34, so that the connection between the drive pulley 34 and the alternator shaft can be engaged and disengaged, depending upon whether or not the compressor 1 is to be utilised. The clutch can be of any known or appropriate type, and means such as an operating button or lever can be provided extending outwardly from the drive housing, so that the clutch can be engaged and disengaged.

It should be appreciated that if desired, means can be provided whereby the compressor 1 can be either directly linked to the shaft of the alternator 30, clutch means being provided in association therewith to engage and disengage the drive shaft 7 of the compressor 1 with and from the shaft of the alternator 30.

In a preferred form of the invention appropriate mounting means are provided so that the compressor 1 can be mounted adjacent to the alternator 30 in a straight forward and efficient manner, such that the drive pulley 34 is positioned in juxtaposition with, but spaced apart from an end of the alternator 30. This then allows straight forward and efficient connection between the alternator shaft and the drive pulley 34. In further forms of the invention appropriate mounting brackets can be provided and mounted in the engine, to locate the compressor in such a position to connect the alternator shaft direct to the drive shaft of the compressor.

In one form of the invention as shown in Figure 1 of the accompanying drawings, the compressor 1 is mounted adjacent the alternator 30 of a motor vehicle, by using adjustment brackets 40 which are usually found on or in association with alternators to allow for adjustment of alternators within the motor vehicle engine. If only one such bracket is provided then an additional bracket will be attached to the other end of the alternator. Alternatively, if no such brackets are provided then brackets can be connected to the alternator, at each end thereof, so as to extend upwardly therefrom. An elongate shaft 44 can then be provided and extend between upper ends of the brackets 40, secured in position by appropriate clamps 46. A further clamp 46 and upstanding bracket 47 are preferably connected at a distal end 44a of the bar 44, this clamp and bracket 46a being of any desired shape or configuration but preferably extending upwardly from the bar 44. The clamps are preferably engaged about the bar 44 by means of appropriate grub screws or keys passing therethrough and bearing against adjacent surfaces of the bar 44. It should be appreciated however that any appropriate form of mounting bracket can be used. In use, to mount the compressor 1 adjacent to the alternator 30, the compressor 1 is brought into juxtaposition with the alternator and the brackets 40, so that the drive pulley 34 and its engagment means are juxtaposed relative to the end of the shaft of the alternator 30. The free extending end 44b of the bar 44 passes through a spacing 50 between the arms of the drive housing and can, if desired, be held in position by additional clamps, screws and the like. The adjacent end of 1a the compressor 1 abuts against the upstanding clamp portion 46a, and is secured in position by appropriate grub screws or keys passing through the bracket and into appropriate screw holes or receiving portions provided in the end 1a of the housing chamber 2 of the compressor 1. This then mounts the compressor 1 in a straight forward and efficient matter, relative to the alternator 30.

If desired, alternate bracket mountings can be provided. The end of the alternator shaft is arranged in any appropriate manner so as to engage within the drive pulley 34, in association with the clutch means referred to.

In use, and when it is desired to use the compressor 1 of the present invention, the engine of a motor vehicle is operated and the clutch of the drive pulley 34 engaged. This then imparts a rotational moment from the shaft of the alternator 30 to the drive pulley 34, which in turn imparts, via the belt 36, a rotational moment to the driven pulley 31 and the drive shaft 7 of the compressor 1 to which it is mounted. The rotational moment so imparted from the alternator to the drive shaft, causes the drive shaft to rotate about its longitudinal axis, this in turn causing the pistons to longitudinally reciprocate within the cylinders. The longitudinal reciprocating movement of the pistons within the cylinders, will draw air into the cylinders, whereafter the air will be compressed and forced out through the one or more outlets. In the preferred form of the invention as shown in the accompanying drawings, the air will be passed into the transverse bar chamber, extending between the outwardly angled cylinders, appropriate outlet means being provided in the bar so that a hose, pipe, tube or the like can be connected thereto to supply compressed air for any desired use or purpose.

In all forms of the invention, the outlet means from the cylinder and/or the transverse bar, may be formed or provided with means to allow for attachment to hoses, pipes, tubes and the like.

It has been found that the present invention is particularly useful in delivering compressed air which will efficiently pump air to a wide variety of equipment. This in turn will allow for example, the pumping up of tires, airbeds and the like, the use of spray painting equipment, the use of airjacks, engine degreasing equipment, air tools and the like. These are however by way of example only.

It has been found that the use of the alternator to drive the compressor is particularly successful, most straight forward efficient and useful. It provides a straight forward means of powering a compressor by using a motor vehicle engine in a manner which has not up until this time been contemplated. The present invention also overcomes and/or minimises problems associated with previous compressors which have drawn power from alternators.

## Claims

1. An air compressor (1) characterised in that said compressor (1) is adapted to be mounted adjacent to an alternator (30) of a motor vehicle, and wherein power is imparted to said compressor (1) from an alternator (30) of a motor vehicle.

2. An air compressor as claimed in Claim 1 wherein the air compressor (1) is mounted on brackets (40) adjacent said alternator (30); connection means (46,46A) being provided between said alternator (30) and said air compressor (1), such that said power is imparted from the alternator (30) to the air compressor (1), to allow for operation thereof.

3. An air compressor as claimed in Claim 1 or Claim 2 wherein said air compressor (1) is mounted adjacent the alternator (30), by at least partially using mounting means (40) associated with said alternator (30).

4. An air compressor as claimed in any one of the preceeding claims, wherein drive means (60) are provided at, and extending outwardly from, one end of said compressor, (1) said drive means (60) being adapted to be engaged with said alternator (30) so as to impart power from said alternator (30) to said compressor (1).

5. An air compressor as claimed in Claim 4, wherein said drive means (60) includes a housing (32) extending outwardly of one end of the compressor; a driven pulley (31) being provided at one end of said housing, adjacent the end of the compressor (1) and being connected to a drive shaft (7) of said compressor; a drive pulley (34) being provided at the other and spaced apart end of said housing (60); belt means (36) passing about said pulleys (31,34); means being provided in association with said drive pulley (34), whereby a shaft of said alternator (30) is engaged with said drive pulley (34), the arrangement being such that on actuation of a motor vehicle engine and operation of said alternator (30), a rotational moment from said alternator shaft is imparted to said drive pulley (34) which in turn causes rotation of the belt (36) to impart said rotational moment to the driven pulley (31) and the connected drive shaft (7) of the compressor (1).

6. An air compressor as claimed in Claim 5, wherein clutch means are associated with the drive pulley (34), so that the drive pulley (34) can be engaged with or disengaged from said alternator (30).

7. An air compressor as claimed in any one of the preceeding claims including a main chamber (2) and at least two cylinders (3,4) connected thereto and being in communication therewith; said cylinders (3,4) being angled and extending outwardly from said chamber (2) on opposing sides thereof; said cylinders (3,4) being provided with air inlet and outlet means (5,6); a transverse and substantially hollow connecting bar (20) extending between said cylinders (3,4) and being so connected thereto, that air outlet means (6) from said cylinders (3,4) lead into said transverse bar (20); one or more compressed air outlets (21) being provided in said transverse bar (20), the arrangement being such that on air being compressed and forced out of said cylinders (3,4) from within said compressor (1), the air will pass into said transverse bar (20), to exit from one or more outlets (21).

8. An air compressor as claimed in Claim 7 wherein one or more outlets (21) in said transverse bar (20) are provided with means to enable connection to an air hose or tube.

9. An air compressor as claimed in Claim 7, wherein an elongate drive shaft (7) extends through the chamber (2) of said compressor (1), an end of said drive shaft (7) being adapted to have a rotational moment imparted thereto from said alternator (30); pistons (8, 9) being provided within said cylinders (3,4) and being connected to said drive shaft (7) such that on a rotational moment being imparted to said drive shaft (7), that rotational moment will impart a reciprocating longitudinal moment to each of said pistons (8,9), such that said pistons (8, 9) will longitudinally reciprocate within said cylinders (3, 4) to act in drawing air into and forcing air from said chamber (2) and cylinders (3, 4).

EP 0 315 721 A1

FIG.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-E- 49 412 (TRICO PRODUCTS CORP.)<br>* Figures 1,2; pages 3, lines 15-96 * &<br>FR-A-827 197 | 1-3 | F 02 B 63/06<br>B 60 K 25/02<br>F 04 B 35/00 |
| A | | 4,5,6,9 | |
| | --- | | |
| A | FR-A-2 372 331 (BOSCH GmbH)<br>* Figures 1,3; page 2, lines 30-34 * | 1 | |
| | --- | | |
| A | FR-A-2 524 400 (VALEO)<br>* Page 10, lines 1-28 * | 1-6,9 | |
| | ----- | | |

TECHNICAL FIELDS
SEARCHED (Int. Cl.4)

F 02 B
B 60 K
F 04 B

The present search report has been drawn up for all claims

| Place of search | Date of completion of the search | Examiner |
|---|---|---|
| THE HAGUE | 28-02-1989 | WASSENAAR G. |

EPO FORM 1503 03.82 (P0401)